# EUROPEAN PATENT SPECIFICATION

(11) **EP 2 831 088 B1**
(45) Date of publication and mention of the grant of the patent: **02.08.2017**
(21) Application number: 13718603.7
(22) Date of filing: 26.03.2013
(51) Int. Cl.: C07G 1/00, C08L 97/00

(54) **LIGNIN AND METHOD AND SYSTEM FOR PROCESSING LIGNIN**
LIGNIN SOWIE VERFAHREN UND SYSTEM ZUR VERARBEITUNG VON LIGNIN
LIGNINE ET PROCÉDÉ ET SYSTÈME POUR LE TRAITEMENT DE LIGNINE

(30) Priority: 29.03.2012 FI 20125362
(43) Date of publication of application: 04.02.2015
(73) Proprietor: UPM-Kymmene Corporation, 00100 Helsinki (FI)
(72) Inventor: VARVEMAA, Päivi, 53100 Lappeenranta (FI); SIPPONEN, Juha, 42330 Haavisto (FI); NISSINEN, Vilho, 54960 Vehkataipale (FI); PIETARINEN, Suvi, 53100 Lappeenranta (FI); PYKÄLÄINEN, Nina, Lappeenranta 53300 (FI); MIETTINEN, Mauno, 53600 Lappeenranta (FI)
(74) Representative: Berggren Oy, Tampere
(86) International application number: PCT/FI2013/050337
(87) International publication number: WO 2013/144445

(56) References cited:
- WO-A1-95/34604
- WO-A1-2010/071440
- WO-A1-2010/075306
- WO-A1-2011/154293
- WO-A2-2012/151509
- WO-A2-2012/151524
- CN-A- 101 747 651
- DE-A1-102010 019 321

## Description

### Field of the Invention

This invention relates to a method and a system for processing lignin. In addition, this invention relates to a product comprising lignin and a method for manufacturing product comprising lignin.

### Background of the Invention

Lignin is an organic substance found in tissues of plants. Lignin binds, for example, the cells, fibres and vessels which constitute wood or another plant and hence causes sturdy, strong cell walls. It is one of the most abundant organic polymers and the second most abundant renewable carbon source on Earth, after cellulose. Lignin is quite an unusual biopolymer due to its heterogeneity, i.e. lignins show a certain variation in their chemical composition. The definition common to all is a dendritic network polymer of phenyl propene basic units.

It is possible to extract the lignin for an assortment of uses when plants are processed for various industrial purposes. For example in paper manufacturing, lignin is removed from the pulp when high-quality bleached paper is manufactured. In this case, the removed lignin is often burned providing energy to run the mill, because lignin yields a great deal of energy (more than cellulose) when burned.

### Summary of the Invention

The present invention discloses a method and a system for processing lignin. The invention further discloses a method for manufacturing a product comprising lignin. In addition, this invention discloses a product comprising lignin powder.

The product comprising lignin powder is a composite, a barrier film, a briquette, a pellet, or a brown paperboard.

Lignin has typically been used as a cake or a clump because lignin dust is explosive material and, hence, grinding of lignin agglomerates into small particles has been very challenging.

If the lignin powder comprises big agglomerates, it may be impossible to mix the lignin powder uniformly to other raw materials, especially at lignin contents of less than 2 %. Thus, in this case, the lignin content of the product may be high locally and, on the other hand, there is no lignin in some locations. According to the present invention, lignin powder and products comprising lignin powder can be manufactured.

Aspects of the invention are characterized by what is stated in the independent claims 1, 10, 11, and 12. Various embodiments of the invention are disclosed in the dependent claims.

The method for processing lignin comprises the following steps:
- feeding lignin material to the system,
- decreasing particle size of the lignin material in a grinding device in order to manufacture lignin powder having particle size distribution wherein at least 85 wt.% of the lignin agglomerates and particles are less than 300 microns,
- increasing dry solids content of the lignin material at least 5 percentage units, more preferably at least 10 or at least 15 percentage units and most preferably at least 20 or at least 25 percentage units while decreasing the particle size in the grinding device, and
- supplying heated air or inert gas to the grinding device.

Preferably, at least 90 % of the lignin agglomerates and particles in the lignin powder have a size of less than 200 microns, more preferably at least 95 % of the lignin agglomerates and particles in the lignin powder have a size of less than 100 microns.

Advantageously dry matter content of the lignin material increases at least 10 percentage units during the grinding process in the grinding device. Dry solids content of the lignin material introduced to the system is preferably between 40 and 90%. Dry solids content of the manufactured powder is preferably between 80 and 100%.

Advantageously the grinding device is a rotor mill. The grinding device preferably comprises a rotor and temperature of a surface of the rotor during the powdering process is less than glass transition temperature of the lignin material. In an example, the grinding device is a hammer mill.

The system for processing lignin comprises:
- an apparatus adapted to feed lignin material to the system,
- a grinding device that is arranged
   - to decrease size of lignin agglomerates and/or particles in order to obtain lignin powder having particle size distribution wherein at least 85 wt.% of the lignin agglomerates and particles have a size of less than 300 microns, and
   - to increase dry solids content of the lignin material at least 5 percentage units while decreasing the particle size in the grinding device, and
- means for supplying heated air or inert gas to the grinding device.

Advantageously lignin powder according to the present invention has particle size distribution in which at least 85 wt.% of the lignin agglomerates and particles are less than 300 microns, more preferably at least 90 wt.% of the lignin agglomerates and particles are less than 200 microns and most preferably at least 95 wt.% of the lignin agglomerates and particles are less than 100 microns. Advantageously moisture content of the manufactured lignin powder is less than 60 %, more preferably less than 40 % and most preferably less than 20 %, i.e. most advantageously the lignin powder has dry solids content between 80 and 100%.

The lignin powder may be used, for example,
- as an additive, such as a binder, or
- as a source of energy.

A method for manufacturing a product comprising lignin powder comprises the following steps:
- feeding first raw material to a system, which raw material may comprise, for example, wood, wood dust, plastic polymer and/or animal feed,
- feeding second raw material to the system, which second raw material comprises lignin powder obtainable from lignin material by decreasing particle size of lignin material in a grinding device, and having particle size distribution wherein at least 95 wt.% of the lignin agglomerates and particles are less than 100 microns and dry matter content of the lignin agglomerates and particles is at least 60 %, and
- forming the product comprising the first and the second raw material, the amount of the lignin powder being at least 0.1 wt.% of dry weight of the product.

Even though not part of the invention, advantageously a system for manufacturing a product comprises
- an apparatus adapted to feed first raw material and second raw material to the system, which second raw material comprises lignin powder having particle size distribution wherein at least 85 wt.% of the lignin agglomerates and particles are less than 300 microns,
- means for mixing the first raw material with the second raw material to obtain a mixture, such as a mixer, and
- an apparatus adapted to form the product from the mixture, wherein the product comprises at least 0.1 wt.% of said lignin powder.

The product according to the present invention comprises lignin powder obtainable from lignin material by decreasing particle size of lignin material in a grinding device, the lignin powder comprising lignin agglomerates and particles; the product is one of a pellet, a composite, a barrier film, a briquette, and a brown paperboard; at least 95 wt.% of the lignin agglomerates and particles are less than 100 microns; dry matter content of the lignin agglomerates and particles is at least 60 %; and has lignin content of at least 0.1 wt.%. Most preferably at least 95 wt.% of the lignin agglomerates and particles are less than 50 microns. Advantageously the product is
- a composite, preferably comprising the lignin powder between 0.1 and 50 wt.%,
- a barrier film, preferably comprising the lignin powder between 0.1 and 30 wt.%,
- a pellet, preferably comprising the lignin powder between 0.1 and 20 wt.%,
- a briquette, preferably comprising the lignin powder between 0.1 and 20 wt.%
- a granulate, preferably comprising the lignin powder between 0.1 and 50 wt.%
- a particle board, preferably comprising the lignin powder between 0.5 and 20 wt.%, or
- a brown paperboard, preferably comprising the lignin powder between 0.5 and 20 wt.%.

In an example, the product is a pellet or a briquette. In this case, the apparatus adapted to form the product comprises a pelleting device or a briquetting device for forming the pellet or the briquette comprising lignin powder from 0.1 to 20 wt.%.

### Description of the Drawings

In the following, the invention will be illustrated by drawings in which
- Fig. 1a: shows an example embodiment of the powdering process in reduced schematic view,
- Fig. 1b: shows an example embodiment of the manufacturing process of the product comprising lignin powder in reduced schematic view,
- Figs 2-14: show photos and results from experimental tests, wherein

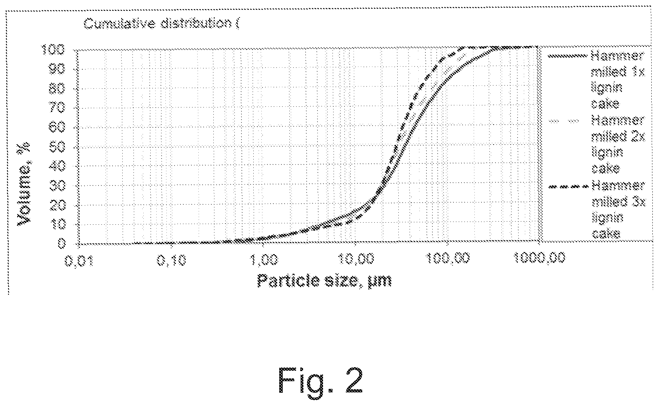

- Fig. 2: shows particle size distribution of hammer milled lignin cakes,

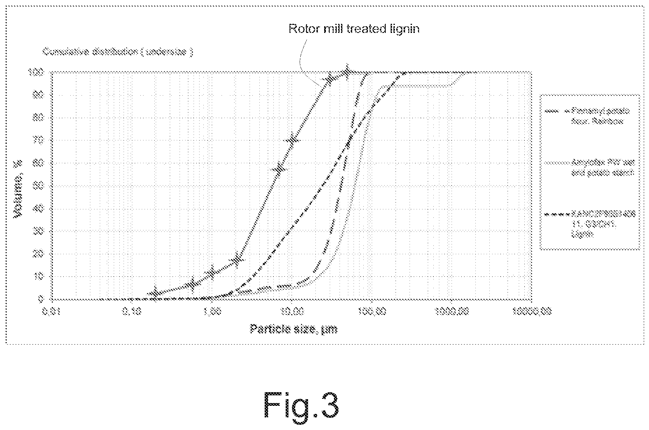

- Fig. 3: shows some particle size distributions,

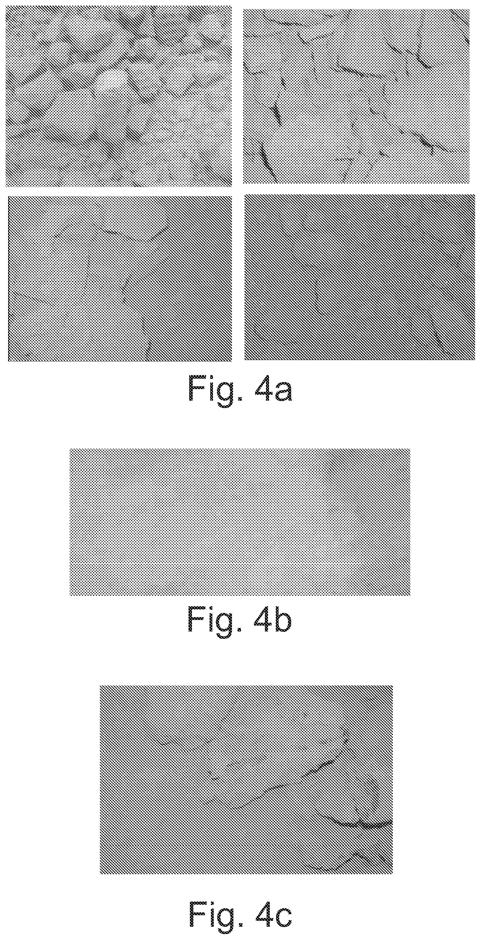

- Fig. 4a: shows some examples of the lignin material to be powdered,
- Fig. 4b: shows an example of the lignin powder,
- Fig. 4c: shows an example of the lignin powder comprising lumps,

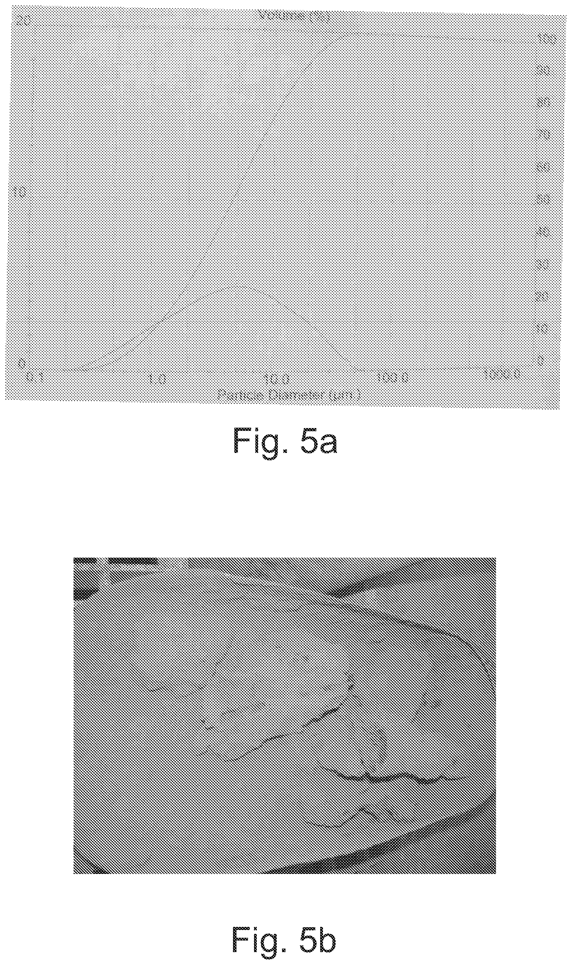

- Fig. 5a: shows particle size distributions of the Long Gap mill processed lignin,
- Fig. 5b: shows an example of the rotor section of the rotor mill comprising lignin material,

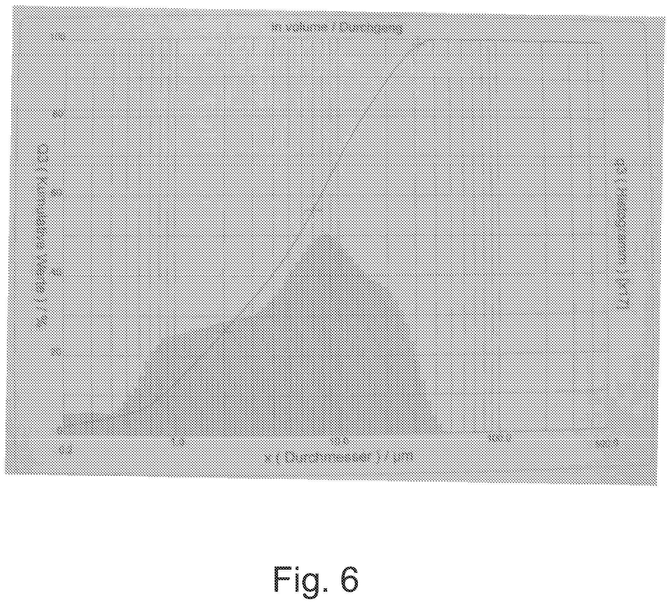

- Fig. 6: shows particle size distributions of the Ultra Rotor mill processed lignin,

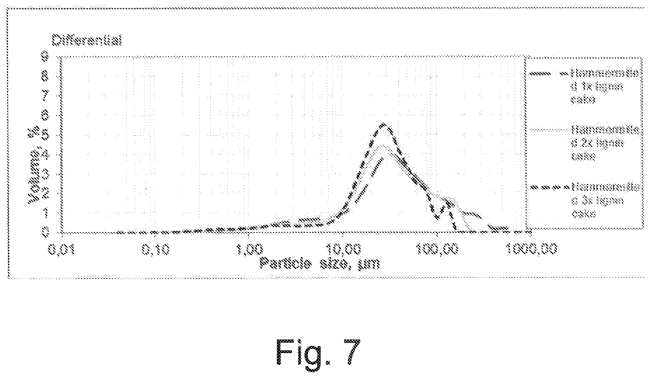

- Fig. 7: shows some particle size distributions of lignin material,

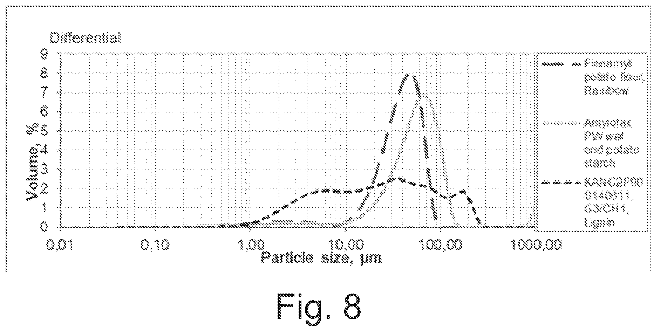

- Fig. 8: shows some particle size distributions of lignin, potato flour and potato starch,

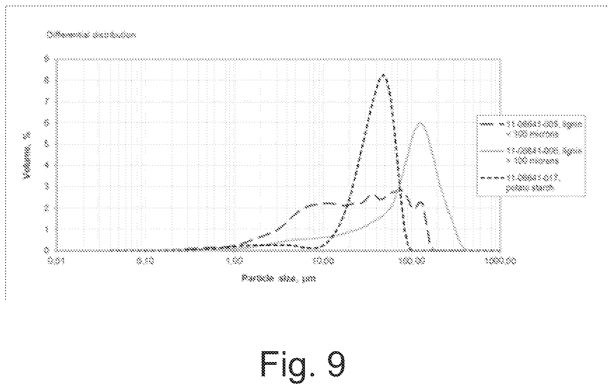

- Fig. 9: shows modified particle size distribution of lignin and starch,

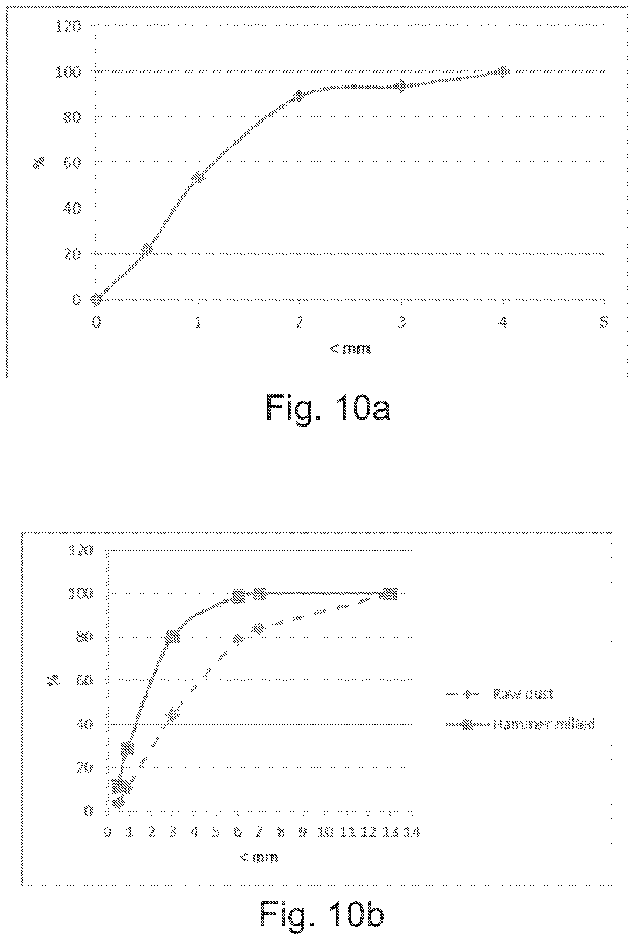

- Figs 10a-b: show particle sizes of wood dust,

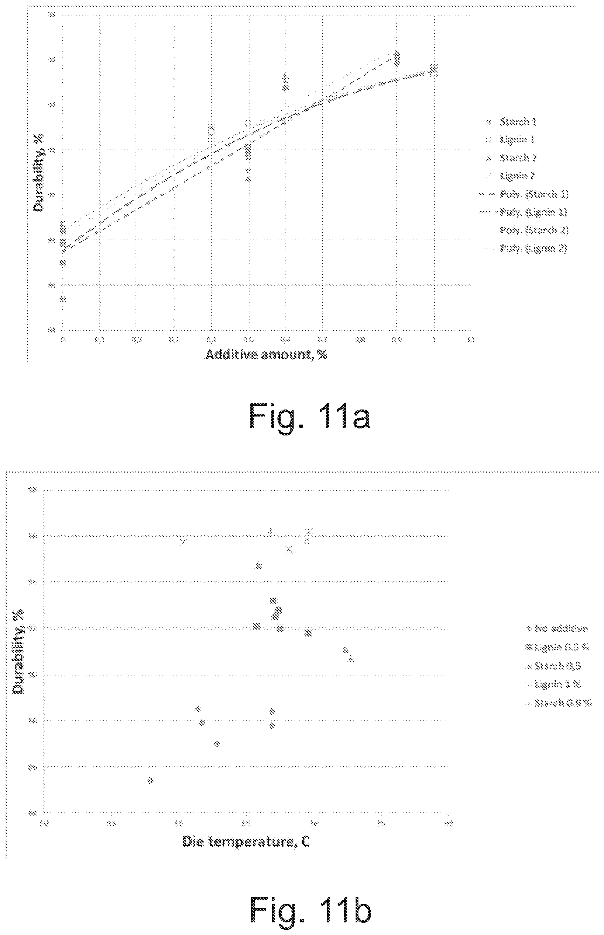

- Fig. 11a: shows pellet durability as a function of additive amount,
- Fig. 11b: shows pellet durability vs. die temperature,

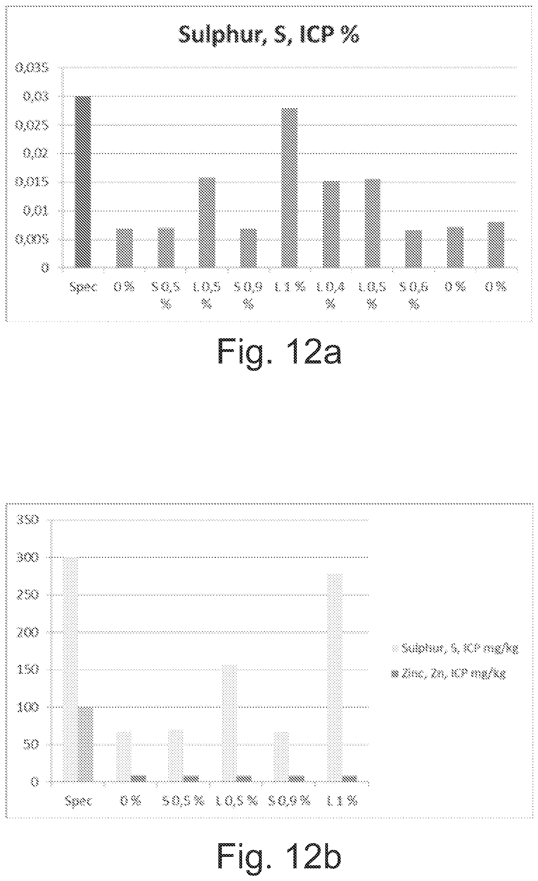

- Fig. 12a: shows amount of Sulphur,
- Fig. 12b: shows amount of Sulphur and Zink,

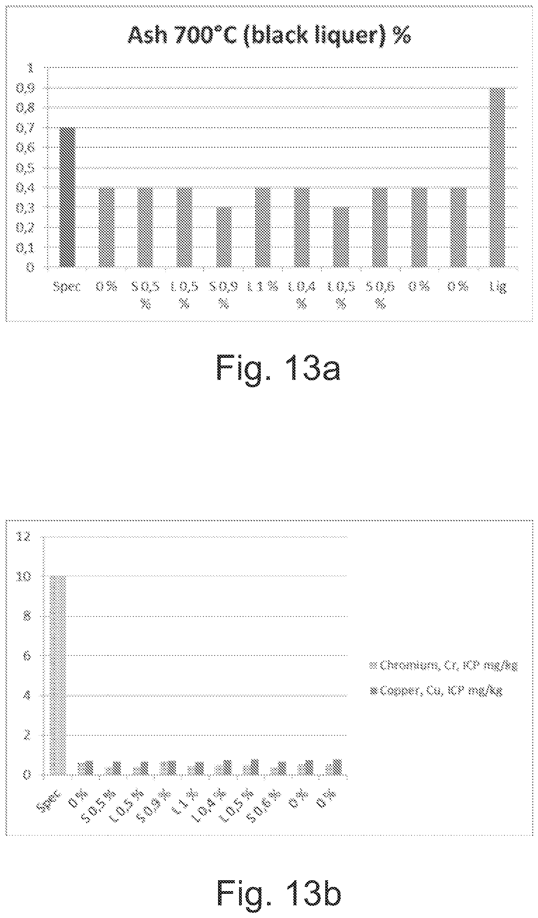

- Fig. 13a: shows amount of Ash,
- Fig. 13b: shows amount of Chromium and Copper, and

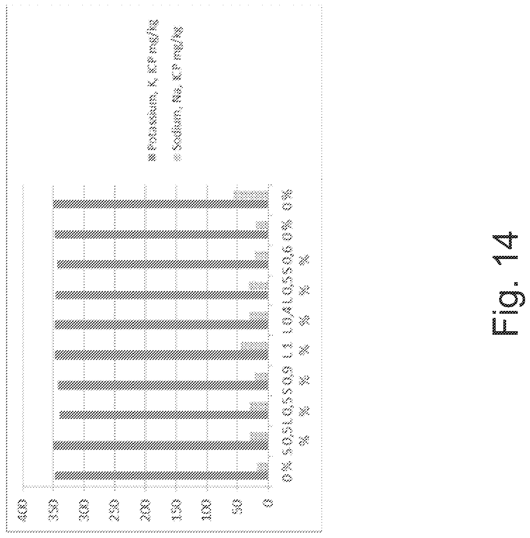

- Fig. 14: shows amounts of Potassium and Sodium.

### Detailed Description of the Invention

In the following disclosure, all percentages are by dry weight, if not indicated otherwise.

The following reference numbers are used in this application:
- 11: lignin material to be powdered,
- 12: lignin powder, i.e. first raw material of a product,
- 13: second raw material(s) of the product,
- 14: product comprising lignin,
- 15: heated air,
- 20: supplying device for the powdering process,
- 22: filtering device,
- 27: air heater,
- 30: grinding device, and
- 40: apparatus adapted to manufacture the product comprising lignin powder.

Lignin is polyphenol which can form strong bindings. It is relatively hydrophobic material and the second most common biopolymer in the nature. Amount of lignin vary in plants. For example, boreal trees have typically about 20-30 percent of lignin but, for example, in coconut shell (coir), the lignin content can be over 45 percent. Lignins show a certain variation in their chemical composition. The definition common to all is a dendritic network polymer of phenyl propene basic units.

The lignin material can be separated from any plant material that contains lignin, i.e. any plant material that contains cellulose. The plant material may be wood. The wood can be from softwood trees such as spruce, pine, fir, larch, douglas-fir and/or hemlock, or from hardwood trees such as birch, aspen, poplar, alder, eucalyptus or acasia, or from a mixture of softwood(s) and/or hardwood(s). Nonwood material can be from agricultural residues, grasses or other plant substances such as straw, leaves, bark, seeds, hulls, flowers, vegetables or fruits from cotton, corn, wheat, oat, rye, barley, rice, flax, hemp, manila hemp, sisal hemp, jute, ramie, kenaf, bagasse, bamboo or reed, or from a mixture of nonwood material(s) and/or wood material(s).

Lignin can be precipitated from black liquor of a kraft pulp mill by a carbon dioxide process, after which it may be pressure filtered, dispersed, acid washed by sulphuric acid and finally pressure filtered and washed by water. After these stages lignin is in a form of filter cakes.

The lignin material can also be separated using a lignin separation process, such as Lignoboost or similar. Typically, the separated lignin is in a form of a lignin cake or a lignin clump. The lignin cake or the lignin clump to be powdered preferably has size between 5 - 150 mm, but the size may vary.

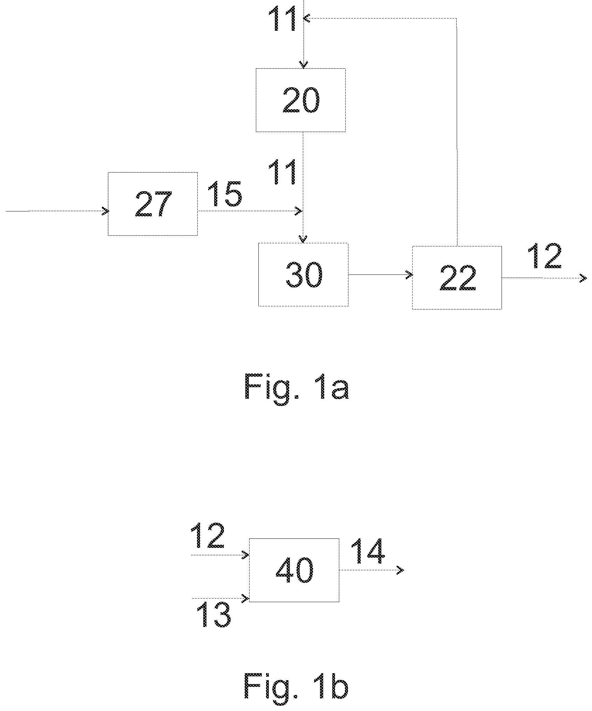

Figure 1 a describes an example of a system wherein lignin material 11 to be powdered is supplied to a powdering process. The figure 1a shows the lignin material to be powdered 11, lignin powder 12, heated air 15, a supplying device 20 for the powdering process, a filtering device 22, an air heater 27, and a grinding device 30.

Advantageously the lignin material to be powdered is supplied to the powdering system and the grinding device 30 therein by the supplying device 20. The air is preferably heated by an air heater 27, such as a heat exchanger, after which the heated air 15 is led to the grinding device 30. In an example, the heated air 15 is generated by means of a heat exchanger from waste heat of a pulp mill. After the grinding step, the powdered lignin material is preferably conveyed to the filtering device 22, in which the lignin material is separated from the circulating air.

In addition, the system preferably comprises a fan, a silencer, a pipe, a pump, and/or valves, such as a rotary valve, a flap valve and an explosion barrier valve.

The lignin material 11 is treated mechanically using grinding technology in order to achieve lignin powder. The lignin material 11 to be powdered may be in a form of pressure filtrated lignin cakes or clumps. Preferably the lignin material that is supplied to the grinding device 30 has dry solids content (before the grinding process) between 40 and 90%, more preferably between 60 and 80 %.

Advantageously the grinding device 30 is a rotor mill, a hammer mill, a stone mill, or an air mill. The system comprises at least one grinding device 30, preferably one, two, three or four grinding devices 30. If the hammer mill is used, the system preferably comprises at least two grinding devices, preferably two or four grinding devices.

In an advantageous embodiment, the grinding device 30 comprises small air volume inside the rotor. Therefore, the grinding device 30 according to the present invention can work well with the explosive lignin powder.

The grinding device 30 is preferably a rotor mill such as a long gap mill or an ultra-rotor mill. Alternatively or in addition, at least one grinding device 30 can be a hammer mill.

One, two, three, four or five of the following may be used to control the grinding process:
- a type of the grinding device,
- speed of the rotor of the grinding device,
- an air volume inside the rotor of the grinding device,
- amount of oxygen inside the rotor of the grinding device, and
- amount of inert gas supplied inside the rotor of the grinding device.

The supplying device 20 is preferably a screw. In an advantageous example, a rotor mill is used as the grinding device 30 and the lignin material is supplied directly to the rotor section of the rotor mill by the screw.

Moisture content of the lignin material preferably decreases significantly in the grinding device 30 during the powdering process. Preferably the moisture content of the lignin material decreases at least 5 or at least 10 percentage units, more preferably at least 15 or at least 20 percentage units, and most preferably at least 25 percentage units in the grinding device 30.

In an advantageous example, dry solids content of the lignin material 11 to be powdered is between 60 and 80% when the lignin material is fed to the grinding device 30.

Advantageously, dry solids content of the lignin powder coming out from the grinding device is at least 40% or at least 60, more preferably between 80 and 100% or between 85 and 99.9%, and most preferably between 90 and 95%.

Advantageously the lignin powder 12 according to the invention has particle size distribution wherein at least 85% or at least 90%, more preferably at least 95% or at least 97% and most preferably at least 99% or at least 100% of the lignin agglomerates and particles have a size of less than 300 microns, or less than 200 microns, more preferably less than 150 microns or less than 100 microns, and most preferably less than 70 microns or less than 50 microns. For example, if the lignin material is used as an additive, it must have small enough particles and agglomerates to be able to effectively work as a binder and to mix efficiently with other raw materials used.

In an example, inert gas, preferably nitrogen, is supplied to the grinding device 30 and used therein during the grinding process. Inert gas is preferably used if the grinding device 30 has large air space. Advantageously, a grinding device having small air space, such as a rotor mill, is used. In this case, the inert gas is not preferably used to avoid increased manufacturing costs.

Figure 1b shows in reduced schematic view an example embodiment of the manufacturing process of the product comprising lignin powder. The lignin powder 12 and other raw material(s) 13 are conveyed to the system in order to manufacture a product 14 comprising lignin powder 12.

Advantageously the product comprising lignin powder 12 is
- a composite,
- a barrier,
- a pellet,
- a briquette, or
- a brown paperboard.

The lignin powder may be used, for example,
- as an additive, such as a binder, or
- as a source of energy.

The lignin, especially if used as an additive, should have small enough agglomerate and particle size distributions to be able to effectively work as a binder. Advantageously the product comprises lignin powder that has particle size distribution wherein at least 85 % or at least 90%, more preferably at least 95% or at least 97% and most preferably at least 99% or at least 100% of the lignin particles and agglomerates have size less than 300 microns, or less than 200 microns, more preferably less than 150 microns or less than 100 microns, and most preferably less than 70 microns or less than 50 microns.

For example in fuels, lignin used as an additive may bind particles together improving durability and, in addition, improve the quality of the fuel, e.g. fuel's combustion properties and heat value.

Advantageously the lignin powder is used as an additive in pellets or briquettes. The lignin powder may be used, for example, as an additive in such a way that the lignin powder works as a binder in the pellet or in the briquette. In addition, the lignin powder may work as a source of additional energy.

The briquette is preferably a wood briquette. The amount of lignin powder in the briquette is preferably between 0.1 and 20 % or between 0.2 and 10%, more preferably between 0.3 and 5% or between 0.4 and 2% and most preferably between 0.5 and 1 %. The amount of lignin used in the briquette typically depends on the sulphur content of the lignin.

A briquette according to the present invention, especially the wood briquette, is densified biofuel made with lignin powder additive in the form of cubiform or cylindrical units, produced by compressing pulverized biomass. Biofuel briquettes are advantageously manufactured in a piston press, with the total moisture content preferably being less than 15 % of the mass on wet basis.

The pellet is preferably a feed pellet or a wood pellet. The amount of lignin powder in the pellet is preferably between 0.1 and 20 % or between 0.2 and 10%, more preferably between 0.3 and 5% or between 0.4 and 2% and most preferably between 0.5 and 1 %. The amount of lignin used in the pellet typically depends on the sulphur content of the lignin. Advantageously the lignin powder to be fed to the pellet processing system has a dry solids content between 60 and 100%, more preferably between 80 and 95% and most preferably between 85 and 92%.

A pellet according to the present invention, such as the wood pellet or the feed pellet, is typically made from pulverized biomass with lignin powder additive. The pellet is usually in a cylindrical form. The wood pellet according to the present invention is preferably densified biofuel made from pulverized woody biomass.

Pelleting may be implemented by means known to a man skilled in the art. Pelleting plant may comprise, for example, a cooling tower, a pelleting machine, additive feeding devices, raw material silos, and a grinding device such as a hammer mill.

The pellet production process advantageously comprises at least some of the below mentioned apparatuses:
- supplying device(s) for feeding the wood dust or another raw material(s), and the lignin powder,
- a first mixer, for example hammer mill, to mix the supplied materials to obtain a mixture,
- air flow transportation means to convey the mixture,
- a separating device, such as a cyclone, to separate air from the mixture,
- a second mixer to remix the mixture,
- steaming and wetting means in order to achieve predetermined moisture content of the mixture,
- a feeding device for the pelleting device, such as a screw, to feed the mixture to the pelleting device,
- a pelleting device to obtain the product 14,
- a cooling device, and
- conveyer to convey the product 14 to a storage.

Advantageously the length of the pellet is between 5 mm to 50 mm, more preferably the length is less than 45 mm and most preferably the length is less than 40 mm. Typically the pellet comprises broken ends. A portion of the pellets having length more than 40 mm is preferably 1 w-% at the most. Advantageously diameter of the pellets is less than 25 mm, more preferably less than 12 mm and most preferably less than 10 mm.

Advantageously the amount of fines in the pellets (w-% of particles having particle size less than 3.15 mm, standard CEN/TS 15149-1, valid in 2011) is 5 % at the most, more preferably 2% at the most and most preferably 1 % at the most.

In an example, the amount of Sulphur (w-% of dry basis, standard CEN/TS 15289, valid in 2011) in the pellet or in the briquette is 0.20 % at the most, more preferably 0.1 % at the most and most preferably 0.08% at the most.

Advantageously, the amount of the Sulphur (standard EN 15289, valid in 2011) in the pellet or in the briquette is preferably 0.05 w-% dry at the most, more preferably 0.04 w-% dry at the most and most preferably 0.03 w-% dry at the most.

In an example, the amount of Nitrogen (w-% of dry basis, standard CEN/TS 15104, valid in 2011) in the pellet or in the briquette is preferably 3 w-% dry at the most, more preferably 2 w-% dry at the most and most preferably 1 w-% dry at the most.

Advantageously, the amount of Nitrogen (w-% of dry basis, standard EN 15104, valid in 2011) in the pellet or in the briquette is preferably 1 w-% dry at the most, more preferably 0.5 w-% dry at the most and most preferably 0.3 w-% dry at the most.

In an example, the amount of Chlorine (w-% of dry basis, standard CEN/TS 15289, valid in 2011) in the pellet or in the briquette is preferably 0.1 w-% dry at the most, more preferably 0.07 w-% dry at the most and most preferably 0.03 w-% dry at the most.

Advantageously, the amount of Chlorine (w-% of dry basis, standard EN 15289, valid in 2011) in the pellet or in the briquette is preferably 0.04 w-% dry at the most, more preferably 0.03 w-% dry at the most and most preferably 0.02 w-% dry at the most.

The amount of Arsenic (As, standard EN 15297, valid in 2011) in the pellet or in the briquette is preferably 1 mg/kg dry at the most.

The amount of Cadmium (Cd, standard EN 15297, valid in 2011) in the pellet or in the briquette is preferably 0.5 mg/kg dry at the most.

The amount of Chromium (Cr, standard EN 15297, valid in 2011) in the pellet or in the briquette is preferably 10 mg/kg dry at the most.

The amount of Copper (Cu, standard EN 15297, valid in 2011) in the pellet or in the briquette is preferably 10 mg/kg dry at the most.

The amount of the Lead (Pb, standard EN 15297, valid in 2011) in the pellet or in the briquette is preferably 10 mg/kg dry at the most.

The amount of the Mercury (Hg, standard EN 15297, valid in 2011) in the pellet or in the briquette is preferably 0.1 mg/kg dry at the most.

The amount of the Nickel (Ni, standard EN 15297, valid in 2011) in the pellet or in the briquette is preferably 10 mg/kg dry at the most.

The amount of the Zinc (Zn, standard EN 15297, valid in 2011) in the pellet or in the briquette is preferably 100 mg/kg dry at the most.

The function of the lignin powder additive in the product may be to improve technical quality of the product and to also strengthen the product towards humidity. The lignin additive may also decrease quality changes caused by heterogeneous raw material and works as a dust binder. For example in pellet production process, lignin gets elastic due to increased temperature and glues particles, such as wood particles, together to pellet. Cooling of pellet hardens the lignin again and makes pellet durable. The caloric value of lignin is high, which makes it good biofuel.

Figure 2 shows example particle size distributions of hammermilled lignin cakes. The lignin cakes are hammermilled in room temperature using sieve with 5 mm aperture size. As can be seen, three times hammermilled lignin material has a smaller average particle size than lignin material that is hammermilled once or twice. Preferably the lignin material is at least twice hammermilled. However, already once hammermilled lignin material may be good enough to use for some products.

Figure 3 shows an example of particle size distributions of lignin, potato starch and potato flour. The materials are treated using hot air during the grinding. As can be seen from Figure 3, the powdered lignin material has typically, especially if grinded with a rotor mill, more small particles than potato starch or potato flour.

Figure 4a shows some examples of the lignin material to be supplied to the rotor mill device. An effect of a grinding temperature on the lignin material is illustrated in Figures 4b and 4c. Figure 4b shows lignin powder manufactured using good process temperature, hence, the obtained material is even lignin powder. If lignin melts it typically forms, not only lignin powder, but also big hard lumps, which is shown in Figure 4c. The lumps shown in Figure 4c are formed due to very high inlet air temperature (350 °C) during powdering process.

Advantageously the inlet temperature of the heated air during the powdering process is less than 160 °C, preferably between 90 and 130 °C, and more preferably between 100 and 120 °C. Most preferably the inlet temperature of the heated air during the powdering process is less than glass transition temperature (Tg) of the lignin material.

An amount of the inlet heated air during the powdering process is preferably at least 8300 m³/t, for example between 8300 and 20000 m³/t, more preferably at least 13 000 m³/t, for example between 13 000 and 17 000 m³/t.

Thanks to the present invention, new lignin products with controlled particle size distribution as well as controlled dry matter content can be obtained. Some experimental tests are shown in the following examples.

### Example 1

In this trial, the performance of powdered lignin as pellet additive was measured and the performance was compared with potato starch and genuine pellets without additives.

In the trial, a mixture of Norway spruce *(Picea abies)* 20% and Scotts pine *(Pinus sylvestris)* 80% was used. Moisture content of the raw material before pelletizing was 9-11%. Pelletizing was done by so called SPC pellet press with vertical fixed round die. Press channel was 50mm and pellet diameter was 8mm.

Pellets were cooled after pressing in cooling tower by fresh air and sampled after cooling. First test of technical durability was done about one hour after pressing. The test was repeated after 5-7 days after pressing in order to see if technical durability would develop differently with lignin additive or starch additive.

Technical durability was tested by a device and a procedure following the European standard of solid biofuels. Pellets were tumbled 500 rounds (50rpm) in the box with metal blade; after that all particles smaller than 3.15 mm were sieved out and remaining mass of pellets was measured.

Temperature and energy consumption as well as all functional measures, like weight changes were monitored as a tailor made data control system built for research purposes in the pellet plant. Tested pellet formulas are shown in Table1.

**Table 1. Additives used in the trial.**

| **Batch** | **Description** |
|---|---|
| 0-test2 | No additives |
| S0.5% | 0.5% of starch as an additive |
| L0.5%2 | 0.5% of lignin as an additive. |
| 0-test3 | No additives |
| 0-test1 | No additives |
| L1% | 1% of lignin as an additive |
| L0.4% | 0.4% of lignin as an additive |
| L0.5% | 0.5% of lignin as an additive |
| S0.6% | 0.6% of starch as an additive |
| S0.9% | 0.9% of starch as an additive |

Technical durability is presented in Table 2. All tested batches were tested twice and average of those two tests was used as a comparison value and input in further tests. CEN-test was repeated some days later in order to find differences of the later strengthening of pellets in storage.

**Table 2. Durability test results of produced pellet batches.**

| Batch | Date | Sample mass before test, g | Sample mass after test, g | CEN-% | Average of sample pairs | CEN-% | Average of sample pairs | Difference %-units |
|---|---|---|---|---|---|---|---|---|
| 0-test3 | 22.9. | 501,06 | 443,29 | 88.47 % | | | | |
| 0-test3 | 22.9. | 503,34 | 442,63 | 87,94 % | 88,20 % | | | |
| L1% | 22.9. | 502,97 | 481,14 | 95,66 % | | 95,61 % | | |
| L.1% | 22.9. | 503,49 | 480,29 | 95,39 % | 95,53 % | 95,66 % | 95,64 % | 0,11 % |
| L0.4% | 22.9. | 503,81 | 465,97 | 92,49 % | | 93,01 % | | |
| L0.4% | 22.9. | 503,78 | 467,65 | 92,83 % | 92,66 % | 93,12 % | 93,07 % | 0,41 % |
| L0.5% | 22.9. | 508,22 | 473,86 | 93,24 % | | | | |
| L0,5% | 22.9. | 508,05 | 467,63 | 92,04 % | 92,64 % | | | |
| L0.5% | 22.9. | 645,34 | 599,17 | 91,85 % | | | | |
| L0.5% | 22.9. | 527,42 | 489,96 | 92,90 % | 92,87 % | | | |
| S0.6% | 22.9. | 512,23 | 485,09 | 94,70 % | | 95,14 % | | |
| S0.6% | 22.9. | 524,92 | 497,55 | 94,79 % | 94,74 % | 95,32 % | 95,23 % | 0,49 % |
| 0-test1 | 21.9. | 462,3 | 394,6 | 85,36 % | | 88,68 % | | |
| 0-test1 | 21.9. | 518,5 | 451,1 | 87,00 % | 86,18 % | 87,87 % | 88,27 % | 2,09 % |
| S0.5% | 21.9. | 557,3 | 507,9 | 91,14 % | | 91,66 % | | |
| S0.5%. | 21.9. | 526,5 | 477,6 | 90,71 % | 90,92 % | 91,85 % | 91,76 % | 0,83 % |
| 10.5% | 21.9. | 597,8 | 550,3 | 92,05 % | | 92,15 % | | |
| L0.5% | 21.9. | 605,0 | 555,6 | 91,83 % | 91,94 % | 92,04 % | 92,09 % | 0,15 % |
| 0-test2 | 21.9. | 616,6 | 545,0 | 88,39 % | | | | |
| 0-test2 | 21.9. | 581,8 | 511,0 | 87,83 % | 83,11 % | | | |
| S0.9% | 23.9. | 545,35 | 524,98 | 96,26 % | | 96,21 % | | |
| S0.9% | 23.9. | 519,5 | 498,96 | 96,05 % | 96,16 % | 96,30 % | 96,25 % | 0,10 % |

Pressing temperatures were followed from 11 measurement points on die and also gear oil temperature was followed. Measurement point numbers follow clock face numbers closely. Temperatures between different batches are not remarkably different. Temperature was not significant in regression analysis either.

Two additive percentages, 0.5 and about 1% were tested for both starch and lignin. With 0.5% the moisture resistance was about 65% but it changed when additive percentage was added. When doubling the additive amount, moisture resistance decreased with lignin and increased with starch. These results are shown in Table 3.

**Table 3. Results of the moisture resistance test.**

| Batch | Original mass, g | Mass after moisture treatment and CEN-test, g | CEN-% |
|---|---|---|---|
| L0.5% | 500,44 | 322,88 | 65 % |
| S0.5% | 500,70 | 321,37 | 64 % |
| S0.9% | 501,17 | 333,20 | 66 % |
| L1% | 501,23 | 306,38 | 61 % |

According to the trial, lignin is as good pellet additive as starch. Remarkable differences cannot be found according to test run made. Technical properties of used lignin additive were somewhat different if compared with starch. Lignin powder is really fine and gets more easily in the air in the process, and it seems to get mixed with raw material better than starch. In a fresh, hot pellet, lignin does not make surface of the pellet sticky like starch does.

Durability of pellets improves in storage. In this test, durability improved most in pellets without additive. According to results, lignin as an additive might decrease this improvement; in other words, lignin added pellet reaches the final strength faster than normal pellets.

### Example 2

During these experimental tests, different kinds of devices and process parameters were tested. The devices used during the trial were:
- Rotor mill 1: a long gap mill,
- Rotor mill 2: an ultra-rotor mill, and
- Rotor mill 3: a flash dryer agitated by a high-speed disintegrating rotor.

The wood material used was a mixture consisting 54 - 60 % of pine and 40 - 46 % of spruce. The raw material was processed by the hammer mill before pelletizing.

Pellet durability test was implemented as follows:
Pellets were treated first by 3.15 mm sieve. 500 ± 10 g of pellets were put to a box and rotated in the box 10 min at speed of 50 rotations per minute. After this, pellets were sieved again and the final mass of the pellets was measured. Durability was calculated as Final mass/Original mass*100 %.

The lignin used is shown in table 4. In addition, Finnamyl potato starch was used as a reference binder.

**Table 4. Selected lignin additive**

| Sample number | Sample code | Weight (kg) | Initial moisture (%) |
|---|---|---|---|
| 1 | G 1 / CH4 | 50 | 26 |
| 2 | G 2 / CH4 | 51 | 26 |
| 3 | G 2 / CH4 | 47 | 26 |
| 4 | C 3 / CH1 | 33 | 53 |
| 5 | G 3 / CH1 | 30 | 53 |
| 6 | G 3 / CH1 | 31,5 | 53 |
| 7 | G 3 / CH1 | 32 | 53 |
| 8 | G 3 / CH1 | 31,5 | 53 |
| 9 | G 4 / CH2 | 58 | 23 |
| 10 | G 5 / CH3 | 56,5 | 30 |
| 11 | G 6 / CH 6 / 1 | 37,5 | 37 |
| 12 | Big batch | 6095 | 39 |

Results of Rotor mill 3 are shown in Table 5. The lignin material could be processed well. The dry matter content of the lignin material varied between 47 % and 77 %,. Some kind of pre-crushing was beneficial to be able to crush the biggest lumps before the feeding screw. The raw material was fed directly to the disintegrator area of the machine.

As can be seen from the particle size distribution in Figure 8 there is a fraction of bigger particles than 100 microns. The coarse material can be felt easily by fingers too. Thus, the sieving is needed to cut away the coarsest fraction of the product.

**Table 5. Resuls of Rotor mill 3**

| Sample | Sample code | Weight (kg) | Initial moisture (%) | Target moisture | moisture | Dry weigth | Final weight |
|---|---|---|---|---|---|---|---|
| 1 | G 1 / CH4 | 50 | 26 | 2 | 1,5 | 37 | |
| 2 | G 2 / CH4 | 51 | 26 | 2 | 1,5 | 37,74 | 39 |
| 3 | G 2 / CH4 | 47 | 26 | 10 | 4,5 | 34,78 | 29 |
| 4 | G 3 / CH1 | 33 | 53 | 10 | 10 | 15,51 | |
| 5 | G 3 / CH1 | 30 | 53 | 10 | 10 | 14,1 | |
| 6 | G 3 / CH1 | 31,5 | 53 | 10 | 13 | 14,81 | |
| 7 | G 3 / CH1 | 32 | 53 | 10 | 13 | 15,04 | |
| 8 | G 3 / CH1 | 31,5 | 53 | 10 | 7,2 | 14,81 | 57 |
| 9 | G 4 / CH2 | 58 | 23 | 10 | 8 | 44,66 | 40 |
| 10 | G 5 / CH3 | 56,5 | 30 | 2 | 2 | 39,55 | 12,6 |
| 11 | G 6 / CH 6 / 1 | 37,5 | 37 | 2 | 2 | 23,63 | 11 |

The runnability of Rotor Mill 2 was good from the beginning. The lignin material was fed by the screw directly to the rotor section of the machine. Further, the inlet air temperature was only 100 - 110 °C. The low air temperature was compensated by the high air flow amount to reach still considerably high evaporation capacity. The final product was fine, good quality powder. Results of the Rotor Mill 2 trials are shown in Table 6.

**Table 6. Results of the Rotor Mill 2 trials.**

| | Test 1 | Test 2 | Test 3 |
|---|---|---|---|
| Inlet temperature, °C | 100 - 108 | 96 | 95 |
| Outlet temperature, °C | 59 - 62 | 42 | 37 |
| Initial moisture, % | 40 | 40 | 40 |
| Residual moisture, % | 3.6 | 5.8 | 7.9 |
| Capacity, kg/h | 150 | 150 | 150 |
| Bulk density, kg/m3 | 290 | | 290 |

| | Test 4 | Test 5 | Test 6 |
|---|---|---|---|
| Inlet temperature | 105 | 102 - 110 | 102 - 110 |
| Outlet temperature | 45 | 45 - 47 | 45 - 47 |
| Initial moisture | 40 | 40 | 40 |
| Residual moisture | 8 | 5.9 - 6.35 | 5.9 - 6.35 |
| Capacity | 150 | 150 | 150 |
| Bulk density | | 290 | |

With Rotor mill 1 , an effect of temperature on the lignin powdering process was tested. Results of Rotor mill 1 are shown in Table 7. The feed material was fed to the inlet air channel of the Rotor mill 1. Feeding took place by the screw first and further by the rotating dozer.

**Table 7. Results of Rotor mill 1**

| | Test 1 | Test 2 | Test 3 | Test 4 |
|---|---|---|---|---|
| Inlet temperature | 350 | 350 | 350 | 350 |
| Outlet temperature | 70 | 65 | 60 | 63 - 65 |
| Initial moisture | 40 | 40 | 40 | 40 |
| Residual moisture | 4.6 | 5.5 | 8.9 | 4.8 - 6.3 |
| Capacity | 220 | 297 | 315 | 315 |

Extremely high, 350 °C, inlet temperature was used in the process in order to see the effect of the high temperature on the lignin material. At the beginning of the trial, the inlet channel was blocked by the feed material. Therefore, the feed material was pre-milled by the hammer mill. The particle sizes after milling were as follows 39,3% < 63 µm, 70% < 500 µm, 80,6% <1 mm, 96,5% < 3,15 mm, 99,9% < 5 mm. No technical problems were seen in the hammer milling.

After that the Rotor mill 1 was still blocked after every half an hour's running. Finally the final product was reported to include big dark and hard lumps as is shown in Figure 5b. Most probably the lignin has stuck onto the hot walls of the machine, melted and formed those lumps. Therefore, the lower temperature, advantageously lower than the melting point of the lignin, should be used. In addition, the material is preferably fed directly to the rotor section. Table 8 shows an effect of the temperature on lignin powder

**Table 8. Effect of the temperature on the lignin powder**

| Property | Rotor mill 2 | Rotor mill 1 | Rotor mill 3 |
|---|---|---|---|
| Production, kg/h | 150 | 300 | 50 |
| T in, °C | 100 - 110 | 350 | 170 |
| T out, °C | 45 - 46 | 60 - 65 | 55 - 65 |
| Particle size, µm | < 50 fine | < **50 + lumps** | **< 300** |
| Pre processing | Crushing screw | Hammer mill | Crushing feeder |
| Feed in | To rotor section | To inlet air | To disintegrator |
| Runnability | Good | **Blocking problems, lumps** | Good |

Particle size distribution of lignin and starch is shown in Figure 8. For the pilot scale trial, the particle size distribution of the Rotor mill 3 dried lignin was modified by 100 microns sieve. About 25 % of material was rejected and milled further by a ball mill. However, the lignin tended to get stuck onto the ball mill walls. The modified particle size distribution is seen in the Figure 9. Particle size distribution of Rotor mill 1 product is presented in Figure 5a. Figure 5b shows an example of the rotor section of the rotor mill comprising lignin material. Particle size distribution of Rotor mill 2 product is presented in Figure 6.

The sieved particle size distribution measured as mass fractions was as shown in Figures 10a and 10b, wherein wood dust tested in a pilot scale is shown in Fig. 10a and wood dust tested in a production scale is shown in Fig. 10b. In the pilot scale 6 mm sieve was used in hammer mill, while in production scale trial 10 mm sieve was used. This can be seen as a slightly finer dust in the pilot scale trial.

Durability tests were done just after the trials and couple of days after the trials. The pellet durability as a function of additive amount tested in pilot scale trial are shown in Figure 11 a and the pellet durability vs. die temperature tested in the production scale trial is shown in Figure 11 b. The die temperature seems to increase durability, which was seen especially in the production scale trials. The durability increases slightly during storing. All in all, both lignin and starch are very comparable binders.

In the production scale trials, the A1 quality level 97.5 % was reached by both lignin and starch containing pellets, while in the pilot trials, the durability of both starch and lignin containing pellet remained under the A1 quality 97.5 %. The reason for this was a 30 degrees higher die temperature in the production machine than in the pilot machine. Additionally the die temperature varied a lot in the pilot machine as can be seen in the figure 11 b.

Amount of Sulphur is shown in Figure 12a, and amount of Zink is shown in Figure 12b. Ash content is shown in Figure 13a and amounts of Chromium and Copper are shown in Fig 13b.

Potassium and Sodium contents are shown in Figure 14. These elements are important for ash melting properties, which were good with both starch and lignin additives. Mixture of nitric acid, hydrogen peroxide and fluorhydric acid was used in the testing.

The Pellet Burning tests were also made. The pellets made at 0.5 % additive level were analyzed as follows. The lignin-containing pellet had slightly better ash melting properties than starch-containing pellet. All the properties fulfilled the A1 specification. Results are shown in Tables 9 to 11.

**Table 9. Pellet analysis table 1**

| | **Lignin** | **Starch** | |
|---|---|---|---|
| Ash content (550 °C) | 0.3 | 0.3 | wt%, d |
| Sulphur content | <0.02 | <0.02 | wt%, d |
| Gross calorific value | 20.50 | 20.48 | MJ/kg. d |
| Net calorific value | 19.15 | 19.13 | MJ/kg. d |
| Net calorific value | 5.319 | 5.314 | MWh/t, d |
| Oxygen bomb combustion for halogens | ****** | ****** | |
| Cl | 0.003 | 0.003 | wt%, d |
| Fusibility of ash (oxidizing atm.) | ****** | ****** | |
| Deformation temperature, DT | 1350 | 1310 | °C |
| Sphere temperature, ST | ------ | 1350 | °C |
| Hemisphere temperature, HT | 1430 | 1360 | °C |
| Flow temperature, FT | >1450 | 1420 | °C |

**Table 10. Pellet analysis table 2**

| | **Lignin** | **Starch** | |
|---|---|---|---|
| Na | 46 | 26 | mg/kg, d |
| K | 440 | 440 | mg/kg, d |
| Ca | 720 | 700 | mg/kg, d |
| Mg | 170 | 170 | mg/kg, d |
| P | 50 | 52 | mg/kg, d |
| Al | 70 | 63 | mg/kg, d |
| Si | 350 | 370 | mg/kg, d |
| Fe | 87 | 86 | mg/kg, d |
| Cr | 0.74 | 0.77 | mg/kg, d |
| Cu | 0.74 | 0.78 | mg/kg, d |
| Mn | 75 | 76 | mg/kg, d |
| Ni | 0.78 | <0.5 | mg/kg, d |
| Zn | 12 | 9.7 | mg/kg, d |

**Table 11. Pellet analysis table 3**

| **Trialpoint** | | 4 | 2 | 3 | 10 | 6 | 7 | 8 | 9 | 5 | 1 | Lignin |
|---|---|---|---|---|---|---|---|---|---|---|---|---|
| **Additive** | **Spec** | 0% | S 0,5% | L 0,5% | S 0,9% | L 1% | L 0,4% | L 0,5% | S 0,6% | 0% | 0% | Lig |
| Sulphur, S, ICP % | 0,03 | 0,0068 | 0,0070 | 0,0158 | 0,0068 | 0,0279 | 0,0153 | 0,0155 | 0,0066 | 0,0072 | 0,0081 | 1,9596 |
| Sulphur, S, ICP mg/kg | 300 | 68 | 70,2 | 158 | 68,3 | 279 | 153 | 155 | 66,3 | 71,7 | 80,5 | 19596 |
| Potassium, K, ICP mg/kg | | 347 | 350 | 339 | 343 | 348 | 347 | 346 | 344 | 348 | 350 | 373 |
| Sodium, Na, ICP mg/kg | | 18,9 | 30,1 | 29,8 | 22,1 | 45,2 | 31,2 | 32,3 | 21,7 | 21,1 | 57,7 | 1879 |
| Zinc, Zn, ICP mg/kg | 100 | 9,1 | 8,23 | 8,6 | 8,26 | 8,66 | 9,15 | 8,64 | 8,29 | 8,77 | 8,47 | 60,4 |
| Chromium, Cr, ICP mg/kg | 10 | 0,58 | 0,402 | 0,414 | 0,638 | 0,457 | 0,48 | 0,471 | 0,369 | 0,504 | 0,517 | 1,32 |
| Copper, Cu, ICP mg/kg | 10 | 0,707 | 0,662 | 0,65 | 0,68 | 0,642 | 0,715 | 0,752 | 0,667 | 0,743 | 0,774 | 2,88 |
| Arsenic, As, ICP mg/kg | 1 | <0,01 | <0,01 | <0,01 | <0,01 | <0,01 | <0,01 | <0,01 | <0,01 | <0,01 | <0,01 | <0,01 |
| Cadmium, Cd, ICP mg/kg | 0,5 | 0 | 0 | 0 | 0 | 0 | 0 | 0 | 0 | 0 | 0 | 0 |
| Nickel, Ni, ICP mg/kg | 10 | 0 | 0 | 0 | 0 | 0 | 0 | 0 | 0 | 0 | 0 | 0,561 |
| Lead, Pb, ICP mg/kg | 10 | 0 | 0 | 0 | 0 | 0 | 0 | 0 | 0 | 0 | 0 | 0 |
| Ash 700°C (black liquer) % | 0,7 | 0,4 | 0,4 | 0,4 | 0,3 | 0,4 | 0,4 | 0,3 | 0,4 | 0,4 | 0,4 | 0,9 |
| Total dry content 60°C % | | 95,9 | 96,1 | 96,6 | 95,8 | 96,2 | 96,3 | 96,5 | 96,4 | 95,4 | 95,6 | 92,7 |

According to the burnability analyses and pellet durability tests the lignin powder can be used as an additive. Moreover, native starch pellet additive can be replaced by lignin. Further, the production scale trial showed clearly the potential of dry lignin powder as an additive in wood pellets. By the 0.59 % addition the A1 durability level 97.5 % was reached.

One skilled in the art readily understands that the different embodiments of the invention may have applications in environments where optimization of processing lignin is desired. It is also obvious that the present invention is not limited solely to the above-presented embodiments, but it can be modified within the scope of the appended claims.

## Claims

1. A method for processing lignin, the method comprising
- feeding lignin material (11) to the system,
- decreasing particle size of the lignin material (11) in a grinding device (30) in order to manufacture lignin powder having particle size distribution wherein at least 85 wt.% of the lignin agglomerates and particles are less than 300 microns, and
- increasing dry solids content of the lignin material while decreasing the particle size in the grinding device (30),
**characterized by**
- supplying heated air (15) or inert gas to the grinding device (30), thereby
- increasing dry solids content of the lignin material at least 5 percentage units while decreasing the particle size in the grinding device (30).

2. The method according to claim 1, **characterized in that** at least 90 % of the lignin agglomerates and particles in the lignin powder have a size of less than 200 microns.

3. The method according to claim 2, **characterized in that** at least 95 % of the lignin agglomerates and particles in the lignin powder have a size of less than 100 microns.

4. The method according to any of the preceding claims, **characterized in that** dry solids content of the lignin material introduced to the system is between 40 and 90%.

5. The method according to any of the preceding claims, **characterized in that** dry solids content of the manufactured powder is between 80 and 100%.

6. The method according to any of the preceding claims, **characterized in that** the grinding device (30) is a rotor mill.

7. The method according to any of the preceding claims 1 to 5, **characterized in that** the grinding device (30) is a hammer mill

8. The method according to any of the preceding claims, **characterized in that** dry matter content of the lignin material increases at least 10 percentage units during the grinding process in the grinding device (30).

9. The method according to any of the preceding claims, **characterized in that** the grinding device (30) comprises a rotor and that temperature of a surface of the rotor during the powdering process is less than glass transition temperature of the lignin material.

10. A system for processing lignin, the system comprising
- an apparatus adapted to feed lignin material (11) to the system, and
- a grinding device (30) that is arranged
• to decrease size of lignin agglomerates and/or particles in order to obtain lignin powder having particle size distribution wherein at least 85 wt.% of the lignin agglomerates and particles have a size of less than 300 microns, and
• to increase dry solids content of the lignin while decreasing the particle in the grinding device (30);
**characterized by**
- means for supplying heated air (15) or inert gas to the grinding device (30) and in that
- the grinding device (30) is arranged to increase dry solids content of the lignin material at least 5 percentage units while decreasing the particle in the grinding device (30).

11. A method for manufacturing a product comprising lignin, the method comprising
- feeding first raw material to a system,
- feeding second raw material to the system, which second raw material comprises lignin powder, obtainable from lignin material (11) by decreasing particle size of lignin material (11) in a grinding device (30), and
- forming the product comprising the first and the second raw material, the amount of the lignin powder being at least 0.1 wt.% of dry weight of the product, wherein
- the product is one of a pellet, a composite, a barrier film, a briquette, and a brown paperboard,
**characterized in that**
- the lignin powder of the second raw material has a particle size distribution wherein at least 95 wt.% of the lignin agglomerates and particles are less than 100 microns and dry matter content of the lignin agglomerates and particles is at least 60 %.

12. A product having lignin content at least 0.1 wt.%, the product comprising
- lignin powder obtainable from lignin material (11) by decreasing particle size of lignin material (11) in a grinding device (30), the lignin powder comprising lignin agglomerates and particles, and
- the product is one of a pellet, a composite, a barrier film, a briquette, and a brown paperboard,
**characterized in that**
- at least 95 wt.% of the lignin agglomerates and particles are less than 100 microns, and
- dry matter content of the lignin agglomerates and particles is at least 60 %.

13. The product according to claim 12, **characterized in that** at least 95 wt.% of the lignin agglomerates and particles are less than 50 microns.

## Patentansprüche

1. Verfahren zur Verarbeitung von Lignin, wobei das Verfahren Folgendes umfasst:
- Zuführen von Ligninmaterial (11) zu dem System,
- Verkleinern der Partikelgröße des Ligninmaterials (11) in einer Mahlvorrichtung (30), um ein Ligninpulver mit einer Partikelgrößenverteilung herzustellen, wobei mindestens 85 Gew.-% der Ligninagglomerate und -partikel kleiner als 300 Mikrometer sind, und
- Erhöhen des Trockenfeststoffgehalts des Ligninmaterials, während die Partikelgröße in der Mahlvorrichtung (30) abnimmt,
**gekennzeichnet durch**
- Zuführen von Heißluft (15) oder Inertgas zur Mahlvorrichtung (30), wodurch
- der Trockenfeststoffgehalt des Ligninmaterials um mindestens 5 Prozenteinheiten zunimmt, während die Partikelgröße in der Mahlvorrichtung (30) abnimmt.

2. Verfahren nach Anspruch 1, **dadurch gekennzeichnet, dass** mindestens 90 % der Ligninagglomerate und -partikel im Ligninpulver eine Größe von weniger als 200 Mikrometern aufweisen.

3. Verfahren nach Anspruch 2, **dadurch gekennzeichnet, dass** mindestens 95 % der Ligninagglomerate und -partikel im Ligninpulver eine Größe von weniger als 100 Mikrometern aufweisen.

4. Verfahren nach irgendeinem der vorangehenden Ansprüche, **dadurch gekennzeichnet, dass** der Trockenfeststoffgehalt des in das System eingebrachten Ligninmaterials zwischen 40 und 90 % liegt.

5. Verfahren nach irgendeinem der vorangehenden Ansprüche, **dadurch gekennzeichnet, dass** der Trockenfeststoffgehalt des hergestellten Pulvers zwischen 80 und 100 % liegt.

6. Verfahren nach irgendeinem der vorangehenden Ansprüche, **dadurch gekennzeichnet, dass** die Mahlvorrichtung (30) eine Rotormühle ist.

7. Verfahren nach irgendeinem der vorangehenden Ansprüche 1 bis 5, **dadurch gekennzeichnet, dass** die Mahlvorrichtung (30) eine Hammermühle ist.

8. Verfahren nach irgendeinem der vorangehenden Ansprüche, **dadurch gekennzeichnet, dass** der Trockensubstanzgehalt des Ligninmaterials während des Mahlverfahrens in der Mahlvorrichtung (30) um mindestens 10 Prozenteinheiten zunimmt.

9. Verfahren nach irgendeinem der vorangehenden Ansprüche, **dadurch gekennzeichnet, dass** die Mahlvorrichtung (30) einen Rotor umfasst und dass die Temperatur einer Oberfläche des Rotors während des Pulverisierverfahrens niedriger als die Glasübergangstemperatur des Ligninmaterials ist.

10. System zur Verarbeitung von Lignin, wobei das System Folgendes umfasst:
- einen Apparat, der an das Zuführen von Ligninmaterial (11) zu dem System angepasst ist, und
- eine Mahlvorrichtung (30), die derart angeordnet ist, dass sie
• die Größe von Ligninagglomeraten und/oder -partikeln verkleinert, um ein Ligninpulver mit einer Partikelgrößenverteilung herzustellen, wobei mindestens 85 Gew.-% der Ligninagglomerate und -partikel eine Größe von weniger als 300 Mikrometer aufweisen, und
• den Trockenfeststoffgehalt des Lignins erhöht, während das Partikel in der Mahlvorrichtung (30) verkleinert wird;
**gekennzeichnet durch**
- Mittel zum Zuführen von Heißluft (15) oder Inertgas zur Mahlvorrichtung (30) und **dadurch, dass**
- die Mahlvorrichtung (30) derart angeordnet ist, dass sie den Trockenfeststoffgehalt des Ligninmaterials um mindestens 5 Prozenteinheiten erhöht, während das Partikel in der Mahlvorrichtung (30) verkleinert wird.

11. Verfahren zur Herstellung eines Lignin umfassenden Produkts, wobei das Verfahren Folgendes umfasst:
- Zuführen eines ersten Rohmaterials zu einem System,
- Zuführen eines zweiten Rohmaterials zu dem System, wobei das zweite Rohmaterial ein Ligninpulver umfasst, das aus Ligninmaterial (11) durch Verkleinern der Partikelgröße des Ligninmaterials (11) in einer Mahlvorrichtung (30) herstellbar ist, und
- Bilden des das erste und zweite Rohmaterial umfassenden Produkts, wobei die Menge des Ligninpulvers mindestens 0,1 Gew.-% des Trockengewichts des Produkts ausmacht, wobei
- das Produkt eines von einem Pellet, einem Verbundstoff, einer Sperrschutzfolie, einem Brikett und brauner Pappe ist,
**dadurch gekennzeichnet, dass**
- das Ligninpulver des zweiten Rohmaterials eine Partikelgrößenverteilung aufweist, wobei mindestens 95 Gew.-% der Ligninagglomerate und -partikel kleiner als 100 Mikrometer sind und der Trockensubstanzgehalt der Ligninagglomerate und -partikel mindestens 60 % beträgt.

12. Produkt mit einem Ligningehalt von mindestens 0,1 Gew.-%, wobei das Produkt Folgendes umfasst:
- ein aus Ligninmaterial (11) durch Verkleinern der Partikelgröße des Ligninmaterials (11) in einer Mahlvorrichtung (30) herstellbares Ligninpulver, wobei das Ligninpulver Ligninagglomerate und -partikel umfasst, und
- das Produkt eines von einem Pellet, einem Verbundstoff, einer Sperrschutzfolie, einem Brikett und brauner Pappe ist,
**dadurch gekennzeichnet, dass**
- mindestens 95 Gew.-% der Ligninagglomerate und -partikel kleiner als 100 Mikrometer sind und
- der Trockensubstanzgehalt der Ligninagglomerate und -partikel mindestens 60 % beträgt.

13. Produkt nach Anspruch 12, **dadurch gekennzeichnet, dass** mindestens 95 Gew.-% der Ligninagglomerate und -partikel kleiner als 50 Mikrometer sind.

## Revendications

1. Procédé de traitement de lignine, le procédé comprenant les étapes consistant à :
- introduire de la matière à base de lignine (11) dans le système,
- réduire la taille des particules de la matière à base de lignine (11) dans un dispositif de broyage (30), afin de produire de la poudre de lignine ayant une distribution granulométrique dans laquelle au moins 85 % en poids des agglomérats et particules de lignine ont une taille inférieure à 300 microns, et
- accroître la teneur en matière sèche de la matière à base de lignine, tout en réduisant la taille des particules dans le dispositif de broyage (30),
**caractérisé par** les étapes consistant à :
- alimenter le dispositif de broyage (30) en air chauffé (15) ou en gaz inerte, de manière à :
- accroître la teneur en matière sèche de la matière à base de lignine d'au moins 5 points de pourcentage, tout en réduisant la taille des particules dans le dispositif de broyage (30).

2. Procédé selon la revendication 1, **caractérisé en ce qu'**au moins 90 % des agglomérats et particules de lignine de la poudre de lignine ont une taille inférieure à 200 microns.

3. Procédé selon la revendication 2, **caractérisé en ce qu'**au moins 95 % des agglomérats et particules de lignine dans la poudre de lignine ont une taille inférieure à 100 microns.

4. Procédé selon l'une quelconque des revendications précédentes, **caractérisé en ce que** la teneur en matière sèche de la matière à base de lignine introduite dans le système est comprise entre 40 et 90 %.

5. Procédé selon l'une quelconque des revendications précédentes, **caractérisé en ce que** la teneur en matière sèche de la poudre produite est comprise entre 80 et 100 %.

6. Procédé selon l'une quelconque des revendications précédentes, **caractérisé en ce que** le dispositif de broyage (30) est un broyeur à rotor.

7. Procédé selon l'une quelconque des revendications 1 à 5 précédentes, **caractérisé en ce que** le dispositif de broyage (30) est un broyeur à marteaux.

8. Procédé selon l'une quelconque des revendications précédentes, **caractérisé en ce que** la teneur en matière sèche de la matière à base de lignine augmente d'au moins 10 points de pourcentage au cours du processus de broyage dans le dispositif de broyage (30).

9. Procédé selon l'une quelconque des revendications précédentes, **caractérisé en ce que** le dispositif de broyage (30) comprend un rotor et **en ce que** la température d'une surface du rotor au cours du processus de réduction en poudre est inférieure à la température de transition vitreuse de la matière à base de lignine.

10. Système destiné à traiter de la lignine, le système comprenant :
- un appareil conçu pour introduire de la matière à base de lignine (11) dans le système, et
- un dispositif de broyage (30) qui est agencé pour :
• réduire la taille des agglomérats et/ou particules de lignine afin d'obtenir de la poudre de lignine ayant une distribution granulométrique dans laquelle au moins 85 % en poids des agglomérats et particules de lignine ont une taille inférieure à 300 microns, et
• accroître la teneur en matière sèche de la lignine, tout en réduisant la taille des particules dans le dispositif de broyage (30) ;
**caractérisé par :**
- un moyen destiné à alimenter le dispositif de broyage (30) en air chauffé (15) ou en gaz inerte, et en ce que :
- le dispositif de broyage (30) est agencé pour accroître la teneur en matière sèche de la matière à base de lignine d'au moins 5 points de pourcentage, tout en réduisant la taille des particules dans le dispositif de broyage (30).

11. Procédé de fabrication d'un produit comprenant de la lignine, le procédé comprenant les étapes consistant à :
- introduire une première matière première dans un système,
- introduire une seconde matière première dans le système, laquelle seconde matière première comprend de la poudre de lignine pouvant être obtenue à partir de la matière à base de lignine (11) par réduction de la taille des particules de la matière à base de lignine (11) dans un dispositif de broyage (30), et
- former le produit comprenant les première et seconde matières premières, la quantité de la poudre de lignine étant d'au moins 0,1 % en poids sec du produit, dans lequel :
- le produit est un produit parmi un granulé, un composite, un film barrière, une briquette, et un carton brun,
**caractérisé en ce que** :
- la poudre de lignine de la seconde matière première a une distribution granulométrique dans laquelle au moins 95 % en poids des agglomérats et particules de lignine ont une taille inférieure à 100 microns et la teneur en matière sèche des agglomérats et particules de lignine est d'au moins 60 %.

12. Produit ayant une teneur en lignine d'au moins 0,1 % en poids, le produit comprenant :
- de la poudre de lignine pouvant être obtenue à partir de matière à base de lignine (11), par réduction de la taille des particules de matière à base de lignine (11) dans un dispositif de broyage (30), la poudre de lignine comprenant des agglomérats et particules de lignine, et
- le produit est un produit parmi un granulé, un composite, un film barrière, une briquette, et un carton brun,
**caractérisé en ce que** :
- au moins 95 % en poids des agglomérats et particules de lignine ont une taille inférieure à 100 microns, et
- la teneur en matière sèche des agglomérats et particules de lignine est d'au moins 60 %.

13. Produit selon la revendication 12, **caractérisé en ce qu'**au moins 95 % en poids des agglomérats et particules de lignine ont une taille inférieure à 50 microns.
